**Europäisches Patentamt**

**European Patent Office**

**Office européen des brevets**

(19)

(11) Numéro de publication: **0 195 698**
**B1**

# (12) FASCICULE DE BREVET EUROPÉEN

(45) Date de publication du fascicule du brevet:
**20.07.88**

(51) Int. Cl.⁴: **E 05 F 11/50**

(21) Numéro de dépôt: **86400352.0**

(22) Date de dépôt: **19.02.86**

(54) **Dispositif d'actionnement, notamment pour dispositif lève-glace de véhicule.**

(30) Priorité: **27.02.85 FR 8502855**

(43) Date de publication de la demande:
**24.09.86 Bulletin 86/39**

(45) Mention de la délivrance du brevet:
**20.07.88 Bulletin 88/29**

(84) Etats contractants désignés:
**DE GB IT SE**

(56) Documents cité:
**EP-A-0 012 250**
**US-A-2 621 926**

(73) Titulaire: **Rockwell- CIM, 6, rue Barbès, F-92302 Levallois- Perret (FR)**

(72) Inventeur: **Periou, Pierre, 15, les Boccages Bruns, F-95000 Cergy Pontoise (FR)**

(74) Mandataire: **Polus, Camille, c/o Cabinet Lavoix 2, Place d'Estienne d'Orves, F-75441 Paris Cedex 09 (FR)**

EP 0 195 698 B1

## Description

La présente invention a pour objet un dispositif d'actionnement muni d'un mécanisme d'autoblocage, notamment pour dispositif lève-glace conforme au préambule de la revendication 1.

Dans un lève-glace de ce type à actionnement manuel le dispositif d'actionnement coopère directement avec la manette d'actionnement d'une part, et le mécanisme de déplacement de la glace en translation d'autre part. Dans ces dispositifs, les mécanismes d'auto-blocage connus du type "auto-lock" sont constitués par une cloche fixée sur la portière du véhicule et contre la paroi intérieure de laquelle est placé un ressort spiral présentant, à l'état détendu, un diamètre supérieur au diamètre intérieur de cette cloche. Celle-ci présente une ouverture à travers laquelle passe l'arbre de la manette d'actionnement, cet arbre comportant deux pattes coopérant avec les extrémités pliées radialement vers l'intérieur du ressort spiral, de manière à réduire son diamètre. Le pignon d'entraînement du mécanisme de déplacement de la glace comporte également deux pattes coopérant avec les extrémités du ressort spiral mais de manière à provoquer une augmentation du diamètre de celui-ci. La disposition alternée de ces pattes permet également le couplage de l'arbre de la manette et du pignon d'entraînement.

De tels dispositifs d'actionnement présentent un inconvénient majeur qui réside dans le jeu introduit par le mécanisme d'auto-blocage qui provoque une course morte de l'arbre de la manette d'un angle dont la valeur ne peut être réduite en dessous de 40°, de manière pratique.

L'invention vise à remédier aux inconvénients précités des dispositifs connus, en créant un dispositif d'actionnement qui présente une course morte réduite et qui assure un blocage et une libération améliorés du dispositif lève-glace.

Un autre but de l'invention est de fournir un dispositif de lève-glace comportant un mécanisme d'auto-blocage perfectionné de construction plus facile et de prix de revient inférieur à ceux de l'art antérieur.

Elle a donc pour objet un dispositif d'actionnement notamment pour dispositif lève-glace de véhicule, comprenant des moyens de déplacement de la glace en translation pourvus d'un pignon denté monté fou sur un arbre d'entraînement, ledit pignon étant lié audit arbre par un mécanisme d'auto-blocage, caractérisé en ce qu'entre le mécanisme d'auto-blocage d'une part et l'arbre d'entraînement et le pignon des moyens de déplacement d'autre part, sont intercalés respectivement des moyens d'accélération de l'effet de libération du mécanisme d'auto-blocage sous l'action de l'arbre d'entraînement et des moyens d'accélération de l'effet de blocage de ce mécanisme sous l'action du pignon desdits moyens de déplacement de la glace.

Selon une caractéristique particulière de l'invention, le dispositif d'actionnement du type précité est caractérisé en ce que le mécanisme d'autoblocage est constitué par un axe monté fixe parallèlement à l'arbre d'entraînement et sur lequel est monté un ressort spiral dont les extrémités sont intercalées chacune entre des parties axiales de deux pignons dentés montés fous sur ledit axe. Des modes particuliers de réalisation font l'objet des revendications dépendantes 2-8.

D'autres caractéristiques et avantages de l'invention apparaîtront au cours de la description qui va suivre, donnée à titre d'exemple et faite en se référant au dessin annexé sur lequel:
- la Fig. 1 est une vue en coupe d'un mécanisme d'actionnement selon l'invention;
- la Fig. 2 est une section suivant la ligne A-A de la Fig. 1.

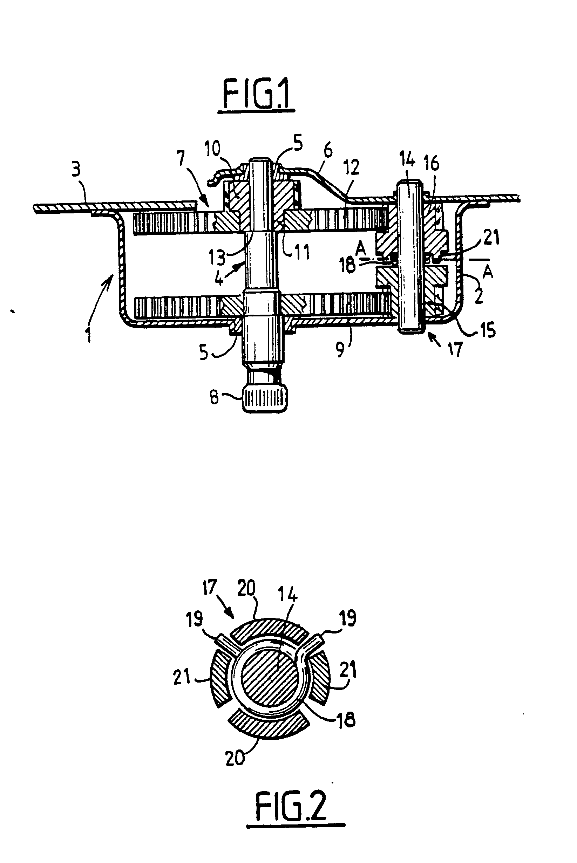

La Fig. 1 représente un mécanisme d'actionnement 1 des moyens de déplacement d'une glace en translation (non représentés). D'une manière générale, ces moyens de déplacement sont du type à secteur denté, à crémaillère ou autre, qui est entraîné au moyen d'un pignon denté d'entraînement. Ces moyens étant connus, ils ne seront donc pas décrits plus en détail.

Le mécanisme d'actionnement est constitué par un capot 2 fixé sur une tôle 3 d'une portière du véhicule (non représentée). Un arbre d'entraînement 4 est monté à rotation dans des paliers 5 en caoutchouc ou analogue, respectivement situés dans des ouvertures ménagées dans le capot et dans une partie 6 de la tôle 3, découpée et repoussée vers l'intérieur de la portière de manière à ménager un passage 7 pour un secteur denté ou une crémaillère (non représentés). L'arbre 4 fait saillie vers l'extérieur du capot 2 et son extrémité 6 présente des cannelures pour la fixation d'une manette d'actionnement (non représentée).

Sur cet arbre 4 et à l'intérieur du capot 2 est calée une première couronne dentée 9 en appui contre le palier situé sur le capot et est monté fou un pignon d'entraînement 10 en appui contre le palier situé dans la partie 6. Ce pignon 10 comporte un prolongement cylindrique 11 sur lequel une deuxième couronne dentée 12 est calée et qui s'appuie contre un épaulement annulaire 13 de l'arbre 4. De ce fait, l'arbre 4 est maintenu fixe en translation. Un axe 14 parallèle à l'arbre 4, est monté fixe dans des ouvertures ménagées dans le capot et la tôle. Un premier 15 et un deuxième 16 pignons dentés sont montés fous sur cet axe 14 de manière à engréner avec les première 9 et deuxième 12 couronnes respectivement pour constituer respictivement des moyens d'accélération 9, 15 de l'effet de libération d'un mécanisme d'auto-blocage 17 et des moyens d'accélération 12, 16 de l'effet de blocage de ce mécanisme.

Comme représenté sur la Fig. 2, ce mécanisme d'auto-blocage comprend en outre un ressort spiral 18, de préférence de diamètre inférieur à celui de l'axe 14, qui est monté sur cet axe, et les extrémités 19 de ce ressort sont repliées radialement vers l'extérieur de manière à coopérer avec des premières pattes 20, formées sur le premier pignon 15 et des deuxième pattes 21 formées sur le deuxième pignon 16. On peut noter qu'une des pattes 20 ne coopère pas avec les extrémités 19 mais est formée pour des raisons de facilité de fabrication.

Avec un tel mécanisme d'actionnement, lorsque l'on tourne la manette (non représentée), et donc l'arbre 4, dans un sens ou dans l'autre, le pignon 15 est entraîné en rotation par l'intermédiaire de la première couronne 9. La patte 20 pousse l'une ou l'autre des extrémités 19 et simultanément les pattes 21, et le ressort spiral est alors décollé de l'axe de sorte qu'il libère les pignons en rotation. Le pignon 15 entraîne la couronne 12 et le pignon d'entraînement qui entraîne à son tour le secteur ou la crémaillère du mécanisme de déplacement pour monter ou descendre la glace.

Si l'on applique à la glace une poussée vers le bas ou une traction vers le haut, l'effort résultant est transmis au pignon 16 dont l'une ou l'autre des pattes 21 s'appuie sur l'extrémité 19 correspondante du ressort. Le ressort se serre sur l'axe 14 et s'oppose ainsi à la rotation des pignons 15 et 16 et donc au déplacement de la glace.

Avec un tel mécanisme il est possible de réduire la course morte l'arbre de la manette, ou jeu dû au mécanisme d'auto-blocage, et d'augmenter et accélérer l'effet de blocage ou de libération de ce dernier. Avantageusement le rapport de transmission de la couronne 9 au pignon 13 est de 5 et le rapport de transmission du pignon 16 à la couronne 12 est de 1/5.

Grâce à un tel choix des rapports de transmission des moyens d'accélération des effets de libération et de blocage, la course morte de l'arbre d'entraînement et donc de la manette peut être réduite à un angle inférieur à 10°.

Il est évident que l'invention n'est pas limitée au mode de réalisation décrit et que de nombreuses modifications peuvent être apportées sans sortir du cadre de l'invention comme décrit dans les revendications. Notamment, il est possible d'utiliser pour les moyens de transmissions à la place des ensembles couronnes-pignons, des ensembles poulies-courroie crantée ou analogues. Il va de soi que l'invention s'applique à tout genre de mécanisme d'auto-blocage en rotation de type connu.

## Revendications

1. Dispositif d'actionnement, notamment pour dispositif lève-glace de véhicule, comprenant des moyens de déplacement de la glace en translation pourvus d'un pignon denté (10) monté fou sur un arbre d'entraînement (4), ledit pignon (10) étant lié audit arbre (4) par un mécanisme d'auto-blocage (17), caractérisé en ce qu'entre le mécanisme d'auto-blocage (17) d'une part et l'arbre d'entraînement (4) et le pignon (10) des moyens de déplacement d'autre part, sont intercalés respectivement des moyens d'accélération (9, 15) de l'effet de libération du mécanisme d'auto-blocage (17) sous l'action de l'arbre d'entraînement (4) et des moyens d'accélération (12, 16) de l'effet de blocage de ce mécanisme sous l'action du pignon (10) desdits moyens de déplacement de la glace.

2. Dispositif selon la revendication 1, caractérisé en ce que le mécanisme d'auto-blocage (17) est constitué par un axe (14) monté fixe parallèlement à l'arbre d'entraînement et sur lequel est monté un ressort spiral (18) dont les extrémités (19) sont intercalées chacune entre des parties axiales (20, 21) de deux pignons (15, 16) dentés montés fous sur ledit axe.

3. Dispositif selon la revendication 1 ou 2, caractérisé en ce que les moyens d'accélération de l'effet de libération et de l'effet de blocage sont constitués respectivement par un desdits pignons (15) coopérant avec une première couronne dentée (9) calée sur l'arbre d'entraînement et l'autre pignon (16) coopérant avec une deuxième couronne dentée (12) calée sur le pignon des moyens de déplacement de la glace.

4. Dispositif selon la revendication 3, caractérisé en ce que le premier rapport de transmission de la première couronne (9) au pignon (13) correspondant est supérieur à 1 et en ce que celui de l'autre pignon (16) à la deuxième couronne (12) est inférieur à 1.

5. Dispositif selon la revendication 4, caractérisé en ce que les première et deuxième couronnes d'une part et les deux pignons dentés d'autre part, sont identiques.

6. Dispositif selon la revendication 5, caractérisé en ce que le premier rapport de transmission est égal à 5.

7. Dispositif selon l'une quelconque des revendications 2 à 6, caractérisé en ce que les parties axiales des deux pignons sont des paires de patte (20, 21) alternées.

8. Dispositif selon l'une quelconque des revendications 2 à 7, caractérisé en ce que le ressort spiral (18) à un diamètre, à l'état détendu, inférieur ou égal au diamètre de l'axe (14).

## Patentansprüche

1. Betätigungsvorrichtung, insbesondere für eine Scheibenhebervorrichtung eines Fahrzeugs, mit Mitteln zur translatorischen Versetzung der Scheibe, welche mit einem lose auf einer Antriebswelle (4) angebrachten Zahnritzel (10) versehen sind, wobei das Ritzel (10) mit der Welle (4) durch einen selbstsperrenden Mechanismus (17) verbunden ist, dadurch gekennzeichnet, daß zwischen dem selbstsperrenden Mechanismus (17) einerseits und der Antriebswelle (4) und dem Ritzel (10) der Versetzungsmittel andererseits Beschleunigungsmittel (9, 15) zur Beschleunigung der Freigabewirkung des selbstsperrenden Mechanismus (17) unter der Einwirkung der Antriebswelle (4) bzw. Beschleunigungsmittel (12, 16) zur Beschleunigung der Sperrwirkung dieses Mechanismus unter der Einwirkung des Ritzels (10) der Mittel zur Versetzung der Scheibe zwischengeschaltet sind.

2. Vorrichtung nach Anspruch 1, dadurch gekennzeichnet, daß der selbstsperrende Mechanismus (17) durch eine feststehend parallel zur Antriebswelle angebrachte Achse (14) gebildet ist, auf welcher eine Spiralfeder (18) angebracht ist, deren Enden (19) jeweils zwischen Axialabschnitten (20, 21) von zwei lose auf der Achse angebrachten Zahnritzeln (15, 16) zwischengeschaltet sind.

3. Vorrichtung nach Anspruch 1 oder 2, dadurch gekennzeichnet, daß die Mittel zur Beschleunigung der Freigabewirkung und der Blockierwirkung durch eines der Ritzel (15), welches mit einem auf der Antriebswelle verkeilten ersten Zahnring (9) zusammenwirkt, bzw. das andere Ritzel (16), welches mit einem auf dem Ritzel der Mittel zur Versetzung der Scheibe verkeilten zweiten Zahnring (12) zusammenwirkt, gebildet sind.

4. Vorrichtung nach Anspruch 3, dadurch gekennzeichnet, daß das erste Übersetzungsverhältnis des ersten Zahnrings (9) zum entsprechenden Ritzel (5) größer als 1 ist und daß dasjenige des zweiten Ritzels (16) zum zweiten Zahnring (12) kleiner als 1 ist.

5. Vorrichtung nach Anspruch 4, dadurch gekennzeichnet, daß der erste und zweite Zahnring einerseits und die beiden Zahnritzel andererseits identisch sind.

6. Vorrichtung nach Anspruch 5, dadurch gekennzeichnet, daß das erste Übersetzungsverhältnis gleich 5 ist.

7. Vorrichtung nach irgendeinem der Ansprüche 2 bis 6, dadurch gekennzeichnet, daß die Axialabschnitte der beiden Ritzel abwechselnde Lappenpaare (20, 21) sind.

8. Vorrichtung nach irgendeinem der Ansprüche 2 bis 7, dadurch gekennzeichnet, daß die Spiralfeder (18) im entspannten Zustand einen Durchmesser hat, der kleiner oder gleich dem Durchmesser der Achse (14) ist.

**Claims**

1. An actuating device, more particularly for a vehicle window glass raising device, comprising means for displacing the glass in translation, including a gear pinion (10) mounted to rotate freely on a driving shaft (4), the pinion (10) being connected to the shaft (4) via an auto-lock mechanism (17), characterized in that means (9, 15) for accelerating the effect of the release of the auto-lock mechanism (17) under the action of the driving shaft (4), and means (12, 16) for accelerating the locking effect of the auto-lock mechanism under the action of the pinion (10) of the glass displacing means are disposed between the auto-lock mechanism (17) on the one hand and the driving shaft (4) and the pinion (10) of the displacement means on the other.

2. A device according to claim 1, characterized in that the auto-lock mechanism (17) is formed by a pin (14) which is mounted fixed in parallel with the driving shaft and on which a spiral spring (18) is mounted whose ends (19) are each interposed between axial portions (20, 21) of the two gear pinions (15, 16) mounted to rotate freely on such pin.

3. A device according to claims 1 or 2, characterized in that the means for accelerating the effect of the release and the effect of the locking are formed respectively by one (15) of the pinions cooperating with a first gear wheel (9) keyed to the driving shaft and the other pinion (16) cooperating with a second gear wheel (12) keyed to the pinion of the glass displacing means.

4. A device according to claim 3, characterized in that the first transmission ratio in the direction from the first gear wheel (9) to the corresponding pinion (15) is higher than 1 and the transmission ratio in the direction from the other pinion (16) to the second gear wheel (12) is lower than 1.

5. A device according to claim 4, characterized in that the first and second gear wheels are identical and the two gear pinions are identical.

6. A device according to claim 5, characterized in that the first transmission ratio is equal to 5.

7. A device according to any of claims 2 to 6, characterized in that the axial portions of the two gear pinions are alternating pairs of lugs (20, 21).

8. A device according to any of claims 2 to 7, characterized in that the spiral spring (18) has in the released state a diameter which is less than or equal to the diameter of the pin (14).

# FIG.1

# FIG.2